# EUROPEAN PATENT SPECIFICATION

(11) **EP 2 819 214 B1**
(45) Date of publication and mention of the grant of the patent: **21.11.2018**
(21) Application number: 14171176.2
(22) Date of filing: 04.06.2014
(51) Int. Cl.: H01M 2/14, H01M 2/16, H01M 10/06

(54) **MAT MADE OF COMBINATION OF COARSE GLASS FIBERS AND MICRO GLASS FIBERS USED AS A SEPARATOR IN A LEAD-ACID BATTERY**
MATTE AUS EINER KOMBINATION VON GROBEN GLASFASERN UND MIKROGLASFASERN ALS SEPARATOR IN EINER BLEISÄUREBATTERIE
TAPIS CONSTITUÉ D'UNE COMBINAISON DE FIBRES DE VERRE GROSSIER ET FIBRES DE VERRE MICROSCOPIQUES UTILISÉES COMME SÉPARATEUR DANS UNE BATTERIE AU PLOMB-ACIDE

(30) Priority: 24.06.2013 US 201313925195
(43) Date of publication of application: 31.12.2014
(73) Proprietor: Johns Manville, Denver, CO 80202 (US)
(72) Inventor: Nandi, Souvik, Highlands Ranch, Colorado 80130 (US); Guo, Zhihua, Centennial, Colorado 80112 (US); Asrar, Jawed, Englewood, Colorado 80111 (US); Dietz, III, Albert G., Littleton, Colorado 80125 (US)
(74) Representative: Mai Dörr Besier European Patent Attorneys

(56) References cited:
- EP-A1- 1 063 334
- EP-A1- 2 571 079
- EP-A2- 0 055 888
- WO-A1-2013/053957
- GB-A- 2 156 576
- US-A- 2 677 007
- US-A- 4 216 280
- US-A- 4 262 068
- US-A- 4 681 802
- US-A- 6 071 651
- US-A1- 2011 318 643

## Description

### BACKGROUND OF THE INVENTION

Separator mats are used in batteries to physically separate and electrically insulate positive and negative electrodes of the battery to prevent unwanted electrical shorting. Since the separators must be able to withstand the harsh chemical environment within a battery, the battery separators are typically chemically resistant to the electrolyte used in batteries, which in lead-acid batteries is often sulfuric acid. Currently, there are several different battery separator types that correspond with a specific type of battery. For example, flooded lead-acid batteries (i.e., lead-acid batteries in which liquid sulfuric acid is dispersed throughout the cell) typically use a separator that includes glass fibers having a relatively large fiber diameter size. The electrolyte in such batteries (e.g., sulfuric acid) generally remains in liquid form during use of the battery and may flow through the battery and/or out of the battery if a crack or leak develops.

Another type of battery is a valve-regulated lead-acid battery (VRLA), which typically includes an immobilized electrolyte (e.g., sulfuric acid). The immobilized electrolyte may be in gel form and may remain in the battery even if a crack develops in the battery's casing or shell. VRLA batteries may use a separator mat (e.g., an absorbed glass mat (AGM)) having relatively fine fibers, such as, for example, glass fibers having a fiber diameter of between about 3-5 microns. The fine glass fiber mats may have a high surface area that allows the mats to absorb and/or retain the battery's electrolyte (e.g., sulfuric acid). The absorption and/or retention of the electrolyte may be due to capillary effects. Absorption and/or retention of the electrolyte may increase as the diameter of the glass fiber decreases, due to an increase in surface area of the separator mat. Using smaller diameter glass fibers, however, may increase the difficulty of bonding the glass fibers together and/or may result in a weakly bonded fiber mat. To properly bond the small diameter glass fibers, an increased amount of binder may be necessary (typically less than 5% of the mat by weight). The increased amount of binder may negatively affect the porosity of the AGM. For example, many AGM mats are configured to have a porosity of roughly 90%. The increased binder may block or plug the pores in the mat and thereby decrease the mats porosity. Some conventional AGM mats do not use a binder and have 95% or greater content of fine fibers (e.g., 3-5 microns). The resulting fiber mat may be prone to puncture due to dendrite growth, shifting of the electrode due to vibrational forces, and the like. As such, these mats may be relatively weak and/or expensive to manufacture.

### BRIEF SUMMARY OF THE INVENTION

Embodiments of the invention described herein provide battery separators and methods for providing or manufacturing battery separators. According to one embodiment, a battery separator for a lead-acid battery is provided. The battery separator includes a nonwoven fiber mat that is positionable between electrodes of a battery to electrically insulate the electrodes. The nonwoven fiber mat includes a plurality of entangled fine fibers that have fiber diameters of between about 0.05 and 5 microns. The nonwoven fiber mat also includes a plurality of coarse fibers that are blended with the plurality of entangled fine fibers. The plurality of coarse fibers include fibers having a fiber diameter of between about 8 and 20 microns. The nonwoven fiber mat further includes an acid resistant binder that couples the plurality of entangled fine fibers with the plurality of coarse fibers to form the nonwoven fiber mat. The nonwoven fiber includes 60 percent or more of the fine fibers, 40 percent or less of the coarse fibers, and 0.5 to 15% of the acid resistant binder and said nonwoven fiber mat has a thickness of 0.381 to 2.03 mm (0.015 to 0.08 inch).

In some embodiments, a plurality of polymer fibers may be blended with the plurality of entangled fine fibers and the plurality of coarse fibers. In such embodiments, the nonwoven fiber mat may include between about 0.1 and 15% of the plurality of polymer fibers. In some embodiments, the fine fibers may have fiber diameters of 1 micron or less. In some embodiments, the coarse fibers may have fiber diameters between about 10 microns and about 20 microns.

In some embodiments, the nonwoven fiber mat may additionally include an additional fiber mat that is disposed on a surface of the nonwoven fiber mat. The additional fiber mat may include a plurality of the coarse fibers that reinforces the nonwoven fiber mat. In some embodiments, the plurality of coarse fibers may be arranged with respect to the plurality of entangled fine fibers so as to form a plurality of strands (e.g., sliver) on a first surface of a mat formed of the plurality of entangled fine fibers, wherein the plurality of strands extend from near a first side of the mat toward an opposite side of the mat. In some embodiments, the nonwoven fiber mat may include a second plurality of entangled fine fibers that form an additional fiber mat. In such embodiments, the additional fiber mat may be disposed on a surface of the nonwoven fiber mat with the plurality of coarse fibers disposed on at least one surface of the additional fiber mat.

In some embodiments, the binder may be sulfuric acid resistant and simultaneously wettable by sulfuric acid. An appropriate choice of binders may include acrylic based emulsion or solution binders. In some embodiments, the nonwoven fiber mat may be made via a wet-laid machine using process water (white water) having a pH of greater than about 4. Due to the non-usage of acidified water, this process may be simpler, safer, and less expensive compared to a typical process of making AGM separators. In some embodiments, the nonwoven fiber mat has a wicking strength, or capillary rise, as defined by ISO8787 of about 0.2-10cm in less than 10min. In other embodiments, the wicking strength, or capillary rise, if the nonwoven fiber mat is 1-1 Ocm, and more commonly 3-10cm, in under 10min.

According to another embodiment, a battery separator is provided. The battery separator includes a plurality of first fibers that form a first fiber mat. The plurality of first fibers include fibers having a fiber diameter of between about 0.05 and 5 microns so as to allow the first fiber mat to absorb an electrolyte of the battery. The battery separator also includes a plurality of second fibers that are disposed on at least one surface of the first fiber mat. The plurality of second fibers include fibers having a fiber diameter of between about 8 and 20 microns. The plurality of second fibers may be arranged on one or more surfaces of the first fiber mat to form a plurality of strands that extend between a first edge of the first fiber mat and a second edge of the first fiber mat opposite the first edge.

In some embodiments, the plurality of strands may extend substantially from the first edge of the first fiber mat to the second edge of the first fiber mat. In some embodiments, the battery separator may further include a second fiber mat that includes fibers having a fiber diameter of between about 0.05 and 5 microns that allows the second fiber mat to absorb the electrolyte. The second fiber mat may be disposed on a surface of the first fiber mat such that the plurality of strands are disposed between the first fiber mat and the second fiber mat.

In some embodiments, the plurality of second fibers may be arranged on a first surface of the first fiber mat and a second surface of the first fiber mat opposite the first surface to form a plurality of strands on both the first surface and the second surface. The strands on the first surface and the second surface may extend between the first edge of the first fiber mat and the second edge of the first fiber mat. In some embodiments, the plurality of strands may be arranged so as to have a spacing of between 0µm and about 10mm between adjacent strands, and more commonly about 5µm and about 10mm. In some embodiments, the plurality of strands may be a first plurality of strands and the plurality of second fibers may be further arranged on the one or more surfaces of the first fiber mat to form a second plurality of strands that extend between a third edge of the first fiber mat and a fourth edge of the first fiber mat opposite the third edge. In such embodiments, the second plurality of strands may be roughly orthogonal to the first plurality of strands.

According to another embodiment, a method of providing a battery separator is provided. The method includes providing a plurality of first fibers having a fiber diameter of between about 0.05 and 5 microns and blending a plurality of second fibers with the plurality of first fibers. The plurality of second fibers includes fibers having a fiber diameter of between about 8 and 20 microns. The method also includes applying an acid resistant binder to the blended fibers to couple the plurality of first fibers with the plurality of second fibers and thereby form a reinforced nonwoven fiber mat that is capable of absorbing an electrolyte of a battery. The nonwoven fiber includes 60 percent or more of the first fibers, 40 percent or less of the second fibers, and 0.5 to 15% of the acid resistant binder.

In some embodiments, the method may further include blending a plurality of polymer fibers with the plurality of first fibers and the plurality of second fibers. In such embodiments, the nonwoven fiber mat may include between about 0.1 and 15% of the plurality of polymer fibers. In some embodiments, the method may additionally include: providing a second mat comprising a plurality of the first fibers and coupling the second mat with the nonwoven fiber mat so that the plurality of second fibers are disposed between the nonwoven fiber mat and the second mat.

In some embodiments, the method may additionally include arranging the plurality of second fibers on a surface of a mat formed from the plurality of first fibers to form a plurality of strands on the surface of the mat that extend between a first edge of the mat and a second edge of the mat opposite the first edge. In such embodiments, the plurality of strands may be arranged on the surface of the mat to have a spacing of between about 5µm and about 10mm between adjacent strands.

### BRIEF DESCRIPTION OF THE DRAWINGS

The present invention is described in conjunction with the appended figures:
Fig. 1 illustrates various elements of a battery according to an embodiment of the invention.
Fig. 2A illustrates a reinforced battery separator including a blend of fine and coarse fibers according to an embodiment of the invention.
Fig. 2B illustrates a battery separator including a reinforcing layer according to an embodiment of the invention.
Fig. 3 illustrates a battery separator including a fine fiber mat disposed between two reinforcing layers according to an embodiment of the invention.
Fig. 4 illustrates a battery separator include a reinforcing layer disposed between two fine fiber mats according to an embodiment of the invention.
Figs. 5A-5C illustrate various battery separators including a reinforcing layer or layers according to an embodiment of the invention.
Fig. 6 illustrates a method for providing a battery separator having a reinforced layer according to an embodiment of the invention.
Fig. 7 illustrates another method for providing a battery separator having a reinforced layer according to an embodiment of the invention.
Fig. 8 is a graph illustrating cross-machine direction tensile strength improvement versus loss on ignition percentage according to an embodiment of the invention.
Fig. 9 is a graph illustrating puncture strength improvement versus binder loss on ignition percentage according to an embodiment of the invention.

In the appended figures, similar components and/or features may have the same numerical reference label. Further, various components of the same type may be distinguished by following the reference label by a letter that distinguishes among the similar components and/or features. If only the first numerical reference label is used in the specification, the description is applicable to any one of the similar components and/or features having the same first numerical reference label irrespective of the letter suffix.

### DETAILED DESCRIPTION OF THE INVENTION

The ensuing description provides exemplary embodiments only, and is not intended to limit the scope, applicability or configuration of the disclosure. Rather, the ensuing description of the exemplary embodiments will provide those skilled in the art with an enabling description for implementing one or more exemplary embodiments. It being understood that various changes may be made in the function and arrangement of elements without departing from the spirit and scope of the invention as set forth in the appended claims.

Specific details are given in the following description to provide a thorough understanding of the embodiments. However, it will be understood by one of ordinary skill in the art that the embodiments may be practiced without these specific details. Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process may be terminated when its operations are completed, but could have additional steps not discussed or included in a figure. Furthermore, not all operations in any particularly described process may occur in all embodiments. A process may correspond to a method, a function, a procedure, a subroutine, a subprogram, etc.

The description herein uses the terms "fine fibers" and "coarse fibers" to generally describe fibers having different fiber diameters relative to one another. Reference to fine fibers generally means that such fibers have fiber diameters smaller than the described coarse fibers, which in some embodiments may be about 5 microns or less. Likewise, reference to coarse fibers generally means that such fibers have fiber diameters larger than the described fine fibers, which in some embodiments may be about 5 microns or larger. Use of the terms "fine" or "coarse" do not imply other characteristics of the fibers beyond the relative sizes of the fibers unless those other characteristics are described.

Embodiments of the invention provide battery separators and methods for providing or manufacturing battery separators. The battery separator includes a fiber mat that includes fine fibers, which are fibers having a diameter of less than 5 microns, between 0.05 and 5 microns, or 2-3 microns or less. In some embodiments, the majority of the fine fibers may be less than about 1 micron. The fine fibers of the mat may allow the mat to absorb and/or hold an electrolyte of a battery so that the electrolyte is retained within the battery even if the battery's casing or shell cracks or breaks. The fine fiber mat is an absorbed glass mat (AGM). The fine fibers used for the mat are glass fibers.

One advantage of such fine fiber mats is the increased porosity they provide, which may be as high as 90%, or higher in some instances. Fine fiber mats may also exhibit various other properties that make them an excellent choice for use as battery separators. A disadvantage of the fine fiber mats, however, may be in the mat's strength. For example, in some embodiments, the fine fiber mats may provide little puncture resistance. As such, the mats may be susceptible to being punctured by the electrode due to vibrational or other forces, dendrite growth, and the like, which may short the battery.

In some embodiments, the invention provides a layer of coarse fibers on a surface of the fine fiber mat. The coarse fibers may reinforce the fine fiber mat and/or increase the puncture resistance of the fiber mat. In some embodiments, the coarse fibers may include fibers having a fiber diameter of about 5 microns or greater, and more commonly greater than about 10 microns. In an exemplary embodiment, the majority of the coarse fibers may have fiber diameters between about 8 and about 30 microns, and more commonly between about 8 and about 20 microns. Examples of coarse fibers that may be used include: glass fibers, polymeric fibers, basalt fibers, polyolefin, polyester, and the like, or a mixture of such fibers.

In some embodiments, the layer of coarse fibers may include a plurality of fiber strands that are arranged, uni-directionally or bi-directionally, on one surface, or opposite surfaces, of the fine fiber mat. In another embodiment, the layer of coarse fibers may include a coarse fiber mat that is positioned adjacent and coupled with a surface of the fine fiber mat. A second coarse fiber mat may be positioned adjacent and coupled with an opposite surface of the fine fiber mat so that the fine fiber mat is sandwiched or disposed between two coarse fiber mats. In yet another embodiment, two fine fiber mats may be positioned adjacent and coupled with opposite surfaces of the coarse fiber mat so that the coarse fiber mat is sandwiched or disposed between two fine fiber mats. As described above, the layer of coarse fibers may reinforce the fine fiber mat and/or provide increased puncture resistance to the fine fiber mat. The combination of the coarse fiber mats, layers, fiber strands, and the like with the fine fiber mats may allow the mats (fine and/or coarse) to be manufactured without using an excess of binder and/or may allow the finer diameter fibers to be used for the fine fiber mat due to the reinforcement of the coarse fibers. Thus, manufacturing costs may be reduced since excess binder may not be required and/or absorption/retention properties may be increased since finer diameter fibers may be used.

Some conventional fibers mats include microfiber contents in the range of 5-30%. In some of the embodiments described herein, the microfiber content may be greater than about 60%. The embodiments may include acid resistant fibers and binder since the mats are typically used in lead acid batteries. Some conventional mats may also include multiple layers (e.g., 1-3 layers) that each have a relatively high porosity and/or pore sizes smaller than about 1 micron. In some of the embodiments described herein, the mat made with a combination of coarse and fine fibers, and/or one or more layers of the mat, does not have a relatively high porosity and/or pore sizes smaller than about 1 micron. In some embodiments, a layer of the mats described herein that is made from coarse fibers may not have an electrolyte absorption rate that is as good as a layer of the mat made of fine fibers. In contrast, some conventional mats include multiple layers that have relatively uniform absorption rates. The embodiments described herein may use a binder, preferably on organic binder, to increase the tensile strength of a mat of blended microfibers and coarse fibers.

Nonwoven glass mats are typically made by conventional wet laid processes as described in U.S. Pat. Nos. 4,112,174, 4,681,802 and 4,810,576. In these processes a slurry of glass fiber is made by adding glass fiber to a typical white water (or called "process water") in a pulper to disperse the fiber in the white water forming a slurry having a fiber concentration of about 0.2-1.0 weight %, metering the slurry into a flow of white water and depositing this mixture on to a moving screen forming wire to dewater and form a wet nonwoven fibrous mat, on machines like a Hydroformer™ manufactured by Voith-Sulzer of Appleton, Wis., or a Deltaformer™ manufactured by North County Engineers of Glenns Falls, N.Y. This wet nonwoven mat of glass fiber is then transferred to a second moving screen and run through a binder application saturating station where an aqueous binder mixture, such as an acrylic binder is applied to the mat. This is followed by sucking off the excess binder and drying the un-bonded, wet mat and curing the resin binder which bonds the fibers together in the mat. Preferably, the binder is applied using a curtain coater or a dip and squeeze applicator, but other methods of application such as spraying will also work. In the drying and curing oven the mat is subjected to temperatures of 250-450 or 500 degrees F. for periods usually not exceeding 1-2 minutes and as little as a few seconds.

An AGM separator, made from essentially microfiber glass, is manufactured on specialty paper machines. According to one embodiment, the details of manufacturing are provided in U.S. Pat. Nos. 5,091,275 as well as "Manufacturing of Microglass Separators" authored by George C. Zguris from Hollingsworth & Vose Company, published in11^{th} Annual Battery Conference on Applications and Advances, 1996. The major difference of this process from a typical wet-laid process is that acidified water is used to help disperse the microfibers. Normally, sulfuric acid is used but other acids, such as phosphoric, can also be used. The typical pH used to disperse the fiber is in the 2.0-3.0 range. Due to this acidic nature, stainless steel is the material of choice for all piping and other major equipment. This increases the capital cost of the equipment. The wet-laid operation for a typical nonwoven glass is simpler, safer, and less expensive. White water (or process water) used typically has pH>4, preferably pH>5. This wet-laid process, which does not involve using acidified water, may be used to make the embodiments described herein. Having generally described some embodiments, additional aspects of the battery separators of the invention will be realized with reference to the Figs.

US 2011/318643 discloses a permanent pasting sheet/pasting paper containing a nonwoven fiber mat comprising: fine fibers having a diameter smaller than 5 microns; coarse fibers having a fiber diameter bigger than 5 microns; and an acid resistant binder that couples the fine fibers with the coarse fibers to form the nonwoven fiber mat; wherein the nonwoven fiber mat comprises 75 weight % of the fine fibers, 20 weight % or less of the coarse fibers, and 5 weight % of the acid resistant binder.

US 4 216 280 discloses a separator for a lead-acid battery (abstract) containing a nonwoven fiber mat comprising: fine fibers having a diameter of 0.5 microns; coarse fibers having a fiber diameter of 13 microns; wherein the nonwoven fiber mat comprises 85 weight % of the fine fibers and 25 weight % of the coarse fibers.

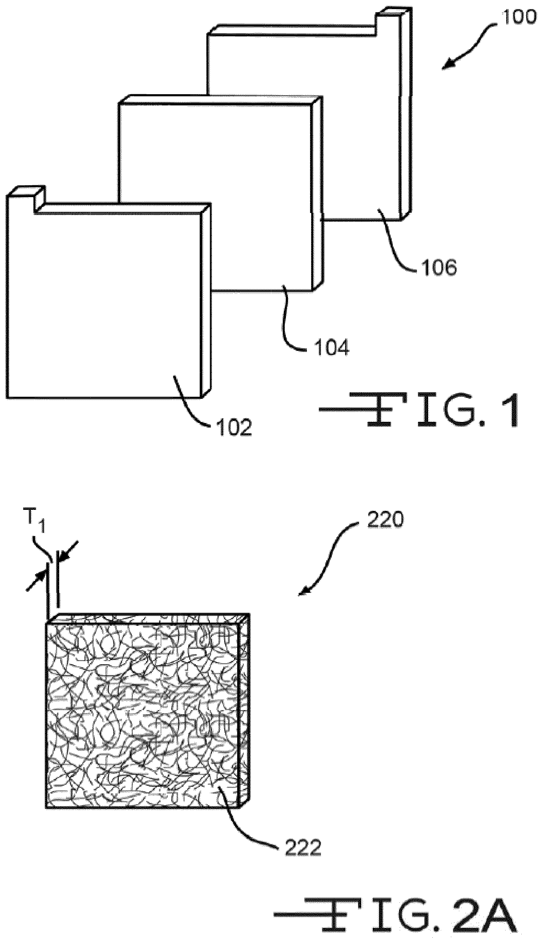

Referring now to Fig. 1, illustrated is a perspective view of elements of a battery 100. Specifically, Fig. 1 shows a first electrode 102, which may be a positive or negative electrode, and a second electrode 106, which may be an electrode having a polarity (i.e., positive or negative) opposite electrode 102. Disposed between first electrode 102 and second electrode 106 is a battery separator 104. Separator 104 electrically insulates first electrode 102 from second electrode 106 as is known in the art. Separator 104 may be a fine fiber mat having a plurality of fine fibers (e.g., fibers having a diameter of about 5 microns or less, and more commonly about 3 microns or less). The fine fibers may allow the mat to absorb an electrolyte (not shown) of the battery, or otherwise retain the electrolyte in contact with the first and second electrodes, 102 and 106, so that an electrochemical reaction may take place as the battery is discharged, recharged, and the like.

Separator 104 may be reinforced with a layer or blend of coarse fibers as described herein so as to provide various benefits, such as increased puncture resistance, and the like. The increased puncture resistance of the reinforced separator 104 may keep the electrodes, 102 and 106, physically separate and prevent a short from developing through separator 104 due to puncturing of the separator. Reinforced separator 104 may resist puncture due to dendrite growth, vibrational forces, and the like.

Referring now to Fig. 2A, illustrated is a separator 220 for a lead-acid battery. The separator 220 includes a nonwoven fiber mat 222 that is positionable between electrodes of a battery to electrically insulate the electrodes. Nonwoven fiber mat 222 includes glass fibers and possibly other electrically insulative fibers, while in another embodiment, nonwoven fiber mat 222 consists entirely of glass fibers. The nonwoven fiber mat 222 includes a plurality of entangled fine fibers and a plurality of coarse fibers that are blended with the plurality of entangled fine fibers so as to form a single nonwoven fiber mat 222. The plurality of entangled fine fibers includes fibers that have a fiber diameter of between about 0.05 and 5 microns, and in some embodiments a fiber diameter of less than 1 micron.. The plurality of coarse fibers includes fibers that have a fiber diameter between 8 and 20 microns. The nonwoven fiber mat 222 also includes an acid resistant binder that couples the plurality of entangled fine fibers with the plurality of coarse fibers to form the nonwoven fiber mat 222. The nonwoven fiber mat 222 includes about 60 percent or more of the fine fibers, 40 percent or less of the coarse fibers, and 0.5 to 15% of the acid resistant binder.

Selection of an appropriate binder for making the mats described herein is important. For example, the binder must sustain sulfuric acid, i.e. be acid resistant. Acid resistance of the binder can be evaluated in the following manner: A handsheet made with the test binder and acid resistant glass fibers (e.g. C-glass and T-glass fibers) is soaked in 40% sulfuric acid at 70C for 72 hours. Weight loss of the mat is measured. Smaller weight loss indicates better acid resistance of the binder.

Further, the binder is preferably acidophilic, otherwise, the binder will significantly reduce the wicking and wetting properties of the mat. The acidophilicity of the binder can be evaluated by measurement of wicking strength, or capillary rise as defined in ISO8787. The test binder is dip-coated on a microfiber paper (Whatman GF/A) and cured. Then test is conducted according to ISO8787. The following lists test results for several test binders where "+" means "satisfied", "++" means "excellent", and "-" means "unsatisfied". According to the test results in Table 1 below, RHOPLEX™ HA-16 is a proper choice out of the test binders.

**Table 1**

| Binder | Acid wetting/wicking | Acid resistance |
|---|---|---|
| RHOPLEX™ HA-16 from Dow Chemical | + | + |
| Rovene 6014 from Mallard Creek | - | N/A |
| Rovene 5500 from Mallard Creek | - | N/A |
| Hvcar 26903 from Lubrizol | - | ++ |
| Plextol M630 from Synthomer | - | N/A |
| QRXP-1676 from Dow Chemical | ++ | - |

In some embodiments, the nonwoven fiber mat 222 includes a plurality of polymer fibers that are blended with the plurality of entangled fine fibers and the plurality of coarse fibers. The nonwoven fiber mat 222 may include between about 0.1 and 15% of the polymer fibers. Although not shown in Fig. 2A, in some embodiments an additional fiber mat may be disposed on one or more surfaces of the nonwoven fiber mat 222. The additional fiber mat (not shown) may include a plurality of the coarse fibers, the fine fibers, and/or a blend thereof so as to reinforce the nonwoven fiber mat 222 and/or provide an additional mat for absorption of the electrolyte. Nonwoven fiber mat 222 has a thickness T₁ of between 0.381 to 2.03 mm (i.e., 0.015 - 0.080 inch).

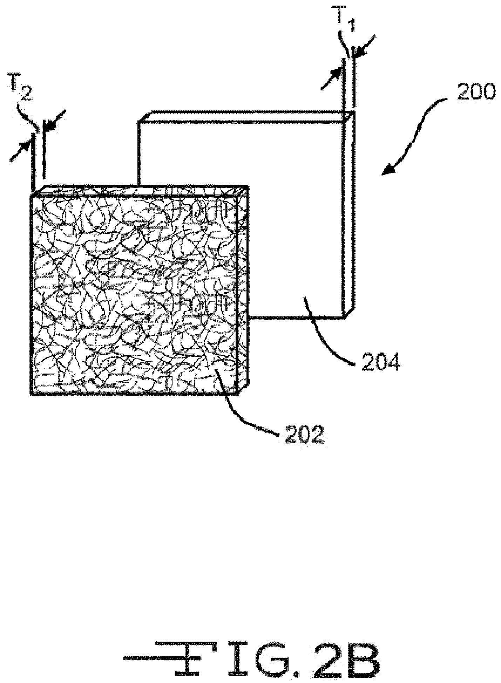

Referring now to Fig. 2B, illustrated is an embodiment of a separator 200 that may be used to separate electrodes, 102 and 106, of battery 100. Separator 200 may include a mat 204 that includes a plurality of fine fibers, which in one embodiment may include fibers having a fiber diameter of about 5 microns or less (e.g., fiber diameters ranging between 0.05 and 5 microns) and in another embodiment may include fibers (or a majority of fibers) having diameters of about 1 micron or less. In one embodiment, the plurality of fine fibers may be a layer of nonwoven entangled fibers that define mat 204. The fine fibers may be electrically insulative fibers, or in other words, fibers having a high resistance (i.e., low conductance) so that mat 204 may be positioned between electrodes to electrically insulate the electrodes.

In one embodiment, fine fiber mat 204 includes glass fibers and possibly other electrically insulative fibers, while in another embodiment, mat 204 consists entirely of glass fibers. Mat 204 may absorb an electrolyte (not shown) of the battery (not shown), or otherwise retain the electrolyte in contact with the electrodes of a battery. In some embodiments, mat 204 may have a thickness T₁ of 0.381 to 2.03 mm (i.e., 0.015 - 0.080 inch). Thickness T₁ of mat 204 may allow the mat to absorb a sufficient amount of the electrolyte so that an electrochemical reaction with the adjacent electrodes occurs as the battery is discharged, recharged, and the like. Mat 204 may be soaked in the electrolyte (e.g., sulfuric acid) prior to or subsequent to being placed between the electrodes of the battery and may retain the electrolyte within the battery even when the casing or shell of the battery is cracked or broken. Absorption and/or retention of the electrolyte may be due to the high surface area of fine fiber mat 204 and/or capillary effects. The fine fibers of mat 204 may be bonded together using one or more binders.

Adjacent to a surface of fine fiber mat 204 is a mat 202 comprising a plurality of coarse fibers. The plurality of coarse fibers may be a layer of nonwoven entangled fibers that define mat 202. Mat 202 may have roughly the same dimensions as mat 204 (e.g., same shape, longitudinal length, transverse length, and the like). To differentiate the two mats in the drawings, fine fiber mat 204 may be illustrated as a solid mat while coarse fiber mat 202 is illustrated as fibrous, although it should be realized that both mats are generally fibrous mats. Coarse fiber mat 202 includes fibers having a fiber diameter of about 5 microns or larger fiber diameters ranging between 8 and 20 microns) and in another embodiment may include fibers (or a majority of fibers) having diameters of about 10 microns or larger. Like the fine fibers, the coarse fibers may be electrically insulative fibers, or in other words, fibers having a high resistance (i.e., low conductance) so that mat 202 electrically insulates electrodes of the battery. Coarse fiber mat 202 includes glass fibers, and may include polymeric fibers, basalt fibers, polyolefin, polyester, and the like, or a mixture thereof. In one embodiment, coarse fiber mat 202 consists entirely of glass fibers, polymeric fibers, or basalt fibers, although other embodiments may include a mixture of such fibers. Although not shown in Fig. 2B, in one embodiment, the plurality of coarse fibers are blended with the fine fibers to form a single fiber mat, rather than having separate fiber mats that are positioned adjacent one another.

In one embodiment, mat 202 may be bonded with mat 204 using one or more binders, such as an acid-resistant acrylic binder and the like. In another embodiment, mat 202 may be laminated with mat 204. In one embodiment, lamination of the mats may be achieved by using adhesives that bond or adhere the mat layers together. In another embodiment, heat-bondable polymer fibers may be used in at least one (or both) layers of the mat. In such embodiments, the mats are laminated together via heat, such as by passing the mats through an oven or heated calender. In another embodiment, one or both of the mat layers may be a "B-stage" mat - i.e., a mat with a binder application that has passed through an oven at a lower temperature than the typical curing temperature ("B-stage" mats typically have a strength approximately between an uncured and cured glass mat). The mats (i.e., the B-stage mat(s) and any non-B-stage mat(s)) may then be passed through an oven set at or above the curing temperature, in which the B-stage mat(s) bond the layers together. In embodiments wherein the plurality of coarse fibers are blended with the fine fibers to form a single fiber mat, an acid resistant binder may be used to couple the plurality of fine fibers with the plurality of coarse fibers to form the single nonwoven fiber mat. In a specific embodiment, the nonwoven fiber mat of Fig. 2B (with either blended coarse and fine fibers or separate fiber layers) may comprise about 60 percent or more of the fine fibers, 40 percent or less of the coarse fibers, and 0.5 to 15% of the acid resistant binder. In some embodiments, the resulting nonwoven mat may further include a plurality of polymer fibers that are blended with the fine fibers and the coarse fibers. In such embodiments, the nonwoven mat may include between about 0.1 and 15% of the plurality of polymer fibers.

The blended coarse fibers, or coarse fiber mat 202, may reinforce the nonwoven fiber mat, or fine fiber mat 204, so that the battery separator resulting from the blended fibers or combined mats is better able to withstand or endure repeated life cycles of the battery and/or endure varying operating conditions. For example, coarse fiber mat 202 may provide improved puncture resistance so that dendrite growth, vibrational forces, and/or other forces do not cause one or both of the electrodes to puncture the battery separator after repeated use and/or use in various conditions.

Mat 202 may have a thickness T₂ of between 0.127 and 1.016 mm (i.e., 0.005 and 0.040 inch). In some embodiments, the coarse fibers of coarse fiber mat 202 may impede or otherwise interfere with mat 204's ability to absorb and/or retain the electrolyte of the battery. Thickness T₂ of mat 202 may minimize mat 202's interference with mat 204's absorbing or retaining of the electrolyte while providing sufficient reinforcement of mat 204. The combination of coarse fiber mat 202 and fine fiber mat 204 as described herein provide improved battery separator strength (e.g., puncture resistance) while also allowing the electrolyte to be absorbed and/or retained within the separator and in contact with the battery's electrodes.

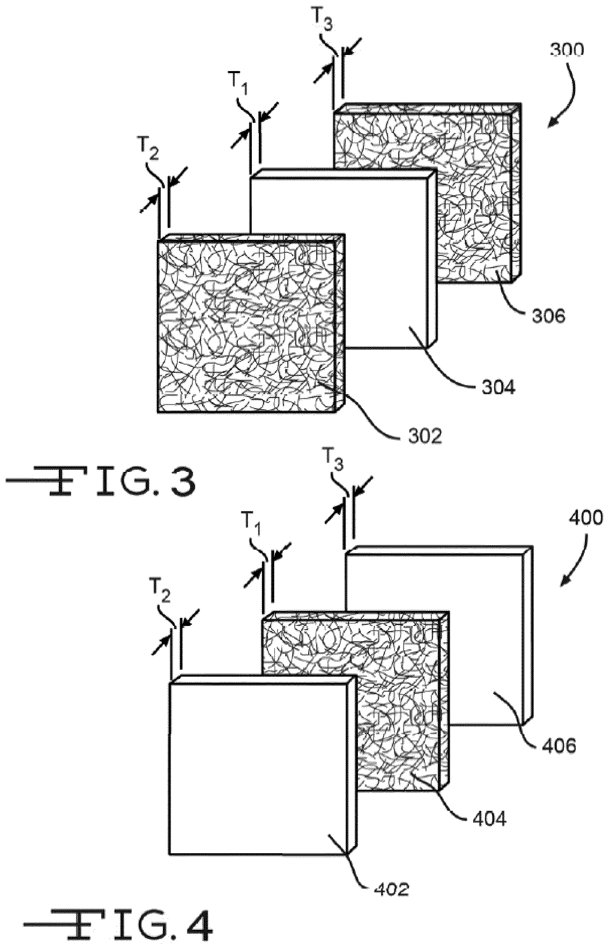

Referring now to Fig. 3, illustrated is another embodiment of a battery separator 300 having a fine fiber mat 304 sandwiched or disposed between two coarse fiber mats, 302 and 306. Fine fiber mat 304 may be a nonwoven mat that includes a plurality of entangled fine fibers, all or a majority of which may have a diameter equal to or smaller than about 5 microns in some embodiments and/or less than or equal to 1 micron in other embodiments. As described previously, fine fiber mat 304 has a thickness T₁ of between 0.381 and 2.03 mm (i.e., 0.015 and 0.080 inch). Fine fiber mat 304 includes glass fibers. Fiber mat 304 includes a blend of fine and coarse fibers, comprising about 60 percent or more fine fibers, 40 percent or less coarse fibers, 0.5 to 15% of an acid resistant binder, and/or 0.1 and 15% polymer fibers.

Disposed on a first surface of fiber mat 304 may be a first coarse fiber mat 302 that may also be a nonwoven mat including a plurality of entangled coarse fibers, all or a majority of which may have a diameter equal to or larger than about 5 microns in some embodiments and/or larger than or equal to 10 microns in other embodiments. In an exemplary embodiment, all or a majority of the coarse fibers may be between about 8 and about 30 microns, and more commonly between about 8 and about 20 microns. Coarse fiber mat 302 may have a thickness T₂ of between about 5 mils and about 40 mils. Coarse fiber mat 302 may reinforce the first surface of fiber mat 304, such as by providing a puncture resistant layer on the first surface. Coarse fiber mat 302 may consist entirely of glass fibers, polymeric fibers, basalt fibers, and/or any other fiber described herein, or may include a combination of any such fibers.

Disposed on a second surface of fiber mat 304 opposite the first surface may be a second coarse fiber mat 306. Coarse fiber mat 306 may be a nonwoven mat including a plurality of entangled coarse fibers, all or a majority of which may have a diameter equal to or larger than about 5 microns in some embodiments and/or larger than or equal to about 10 microns in other embodiments. Like mat 302, in one embodiment, all or a majority of the coarse fibers may be between about 8 and about 30 microns, and more commonly between about 8 and about 20 microns. Coarse fiber mat 306 may include coarse fibers having a similar fiber diameter size to mat 302, or may include coarse fibers having different fiber diameter sizes so that fiber mat 304 is disposed between two coarse fiber mats having different sized fibers or having a majority of different sized fibers. Coarse fiber mat 306 may have a thickness T₃ of between 0.127 to 1.016 mm Thickness T₃ may be similar to thickness T₂ so that both coarse fiber mats, 302 and 306, are approximately the same thickness, or thickness T₃ may be different than thickness T₂ so that fiber mat 304 is disposed between two coarse fiber mats with different thicknesses.

Coarse fiber mat 306 may reinforce the second surface of fiber mat 304, such as by providing a puncture resistant layer on the second surface. Like mat 302, coarse fiber mat 306 may consist entirely of glass fibers, polymeric fibers, basalt fibers, and/or any other fiber described herein, or may include a combination of any such fibers.

The ratio of coarse fibers or coarse fiber mats to fine fibers or fiber mats (e.g., ratio of T₁:T₂:T₃) may provide a battery separator 300 exhibiting increased strength (e.g., puncture resistance) while providing sufficient electrolyte absorbing properties. In other words, the thicknesses, T₂ and T₃, of coarse fiber mats, 302 and 306, may be sufficiently thick so as to reinforce fiber mat 304 while being sufficiently thin so that the battery's electrolyte maybe absorbed and/or retained within battery separator 300.

Referring now to Fig. 4, illustrated is another embodiment of a battery separator 400 having a coarse fiber mat 404 sandwiched or disposed between two fine fiber mats, 402 and 406. As described herein, coarse fiber mat 404 may be a nonwoven mat that includes a plurality of entangled coarse fibers, all or a majority of which may have a fiber diameter equal to or larger than about 5 microns in some embodiments and/or larger than or equal to about 10 microns in other embodiments. In one embodiment, all or a majority of the coarse fibers may be between about 8 and about 30 microns, and more commonly between about 8 and about 20 microns. Coarse fiber mat 404 may have a thickness T₁ of between about 5 mils and about 40 mils. Coarse fiber mat 404 may provide reinforcing inner layer for battery separator 400, such as by providing a puncture resistant layer in battery separator 400's interior. Coarse fiber mat 404 may consist entirely of glass fibers, polymeric fibers, basalt fibers, and/or any other fiber described herein, or may include a combination of any such fibers. In another embodiment, fiber mat 404 may include a blend of fine and coarse fibers, such as a mat comprising about 60 percent or more fine fibers, 40 percent or less coarse fibers, 0.5 to 15% of an acid resistant binder, and/or 0.1 and 15% polymer fibers.

Disposed on a first surface of fiber mat 404 may be a first fine fiber mat 402 that may also be a nonwoven mat including a plurality of entangled fine fibers, all or a majority of which may have a diameter equal to or smaller than about 5 microns in some embodiments and/or smaller than or equal to about 1 micron in other embodiments. Fine fiber mat 402 may have a thickness T₂ of between about 15 mils and about 80 mils. Fine fiber mat 404 may include glass fibers or any other electrically insulative fiber described herein. Fine fiber mat 404 may absorb the electrolyte (e.g., sulfuric acid) of the battery and/or otherwise retain the electrolyte in contact with one electrode of the battery.

Disposed on a second surface of fiber mat 404 opposite the first surface may be a second fine fiber mat 406. Fine fiber mat 406 may be a nonwoven mat including a plurality of entangled fine fibers, all or a majority of which may have a diameter equal to or smaller than about 5 microns in some embodiments and/or smaller than or equal to about 1 micron in other embodiments. Fine fiber mat 406 may include fine fibers having a similar diameter size to mat 402, or may include fine fibers having different diameter sizes so that fiber mat 404 is disposed between two fine fiber mats having different sized fine fibers or having a majority of different sized fine fibers. In another embodiment, one or both of fiber mats 402 and 406 includes a blend of fine and coarse fibers, such as a mat comprising any combination of about 60 percent or more fine fibers, 40 percent or less coarse fibers, 0.5 to 15% of an acid resistant binder, and 0.1 and 15% polymer fibers. In such embodiment, fiber mat 404 may have a higher percentage of coarse fibers than mats 402 and 406 so as to provide a reinforcement layer for mats 402 and 406. Mats 402 and 406 may have a higher percentage of fine fibers so as to be capable of absorbing more electrolyte than mat 404.

Fiber mat 406 may have a thickness T₃ of between 0.381 and 2.032 mm (15 to 80 mils). Thickness T₃ may be similar to thickness T₂ so that both fiber mats, 402 and 406, are approximately the same thickness, or thickness T₃ may be different than thickness T₂ so that fiber mat 404 is disposed between two fiber mats, 402 and 406, with different thicknesses. The different sized fibers mats (e.g., fiber mat 402 including different fiber diameters and/or having a different mat thickness than fiber mat 406) may allow battery separator 400 to adjust or compensate for various batteries or battery needs depending on the condition, use, operation of, or any other condition of the battery. For example, fiber mat 402 may be configured to absorb and/or retain a first amount of the electrolyte in contact with a first electrode while fiber mat 406 is configured to absorb and/or retain a second, and possibly different, amount of the electrolyte in contact with a second electrode. As such, battery separator 400 may be modified or adjusted according to the battery in which it is to be used, or for the condition or operation for which it is to be used.

Fiber mats, 402 and 406, disposed on the outside surface of battery separator 400 may directly contact the electrodes of the battery and, thus, may provide an advantage that fiber mat 404 does not interfere with the absorption and/or retention of the electrolyte and/or the interaction of the absorbed electrolyte and the electrode. At the same time, the inner fiber mat layer 404 provides increased strength (e.g., puncture resistance) to battery separator 400 so as to increase the life of battery separator 400 and/or the battery, such as, for example, by preventing or reducing penetration of the electrode through the separator. Thus, battery separator 400 provides increased strength (e.g., puncture resistance) while providing excellent electrolyte absorbing properties.

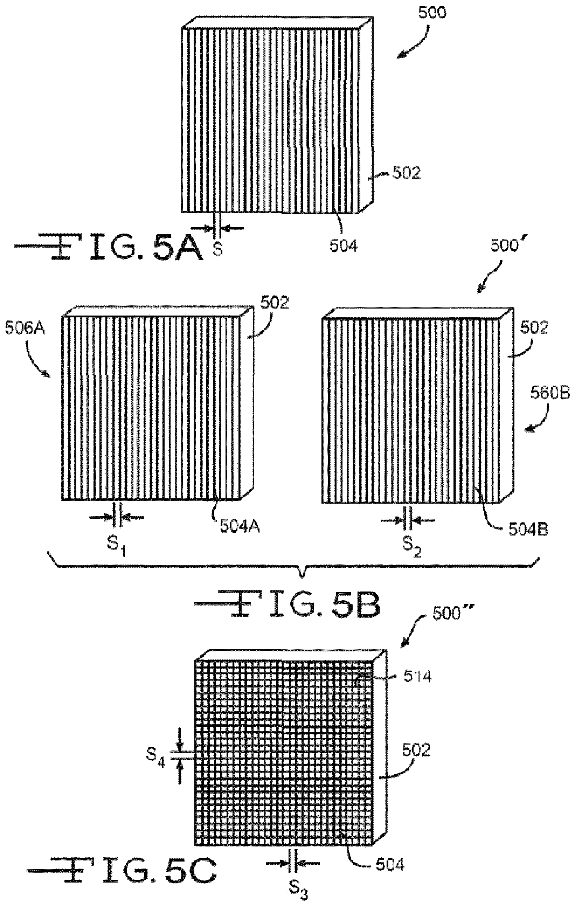

Referring now to Figs. 5A-5C, illustrated are embodiments of other battery separators 500, 500', and 500". Fig. 5A illustrates a fine fiber mat 502 that, as described above, may be a nonwoven mat including a plurality of entangled fine fibers, all or a majority of which may have a diameter equal to or smaller than about 5 microns in some embodiments (e.g., 0.05 to 5 microns) and/or equal to or smaller than about 1 micron in other embodiments. Fine fiber mat 502 may include or consist entirely of glass fibers or any other electrically insulative fiber described herein. Fine fiber mat 502 may absorb and/or retain the electrolyte (e.g., sulfuric acid) of the battery and/or otherwise hold the electrolyte in contact with one electrode of the battery.

Disposed and coupled on one surface of fine fiber mat 502 may be a plurality of uni-directionally arranged fiber strands 504. Fiber strands 504 may also be referred to as sliver or roving. Each strand of fiber strands 504 may include a plurality of fibers entangled, bonded, woven, or otherwise coupled together to form the strand. The fiber strands may include or consist entirely of coarse fibers, all or a majority of which may have a diameter equal to or larger than about 5 microns in some embodiments and/or equal to or larger than about 10 microns in other embodiments. The coarse fibers have between 8 and 20 microns in diameter. Each strand may consist of fibers having diameters of between about 5µm and about 35µm (i.e., 0.000005 and 0.000035 meter).

The fiber strands 504 may be arranged on the surface of fine fiber mat 502 so as to extend longitudinally from near a first side or edge of mat 502 toward an opposite side or edge of the mat 502 as shown in Fig. 5A. Fiber strands 504 may have a spacing S between adjacent strands, which in some embodiments may be between 0µm and about 10mm, and more commonly between about 5µm and about 10mm (i.e., 0.000005 and 0.010 meter). Fiber strands 504 may consist entirely of glass fibers, polymeric fibers, basalt fibers, and/or any other fiber described herein, or may include a combination of any such fibers. Fiber strands 504 may be bonded with the surface of fine fiber mat 502 using one or more binders and/or by laminating the strands atop the mat, such as by using one of the bonding methods described herein.

Fiber strands 504 may function similar to the coarse fiber mats described above to reinforce the surface of fine fiber mat 502, such as by providing increased puncture resistance to fine fiber mat 502. The reinforcement provided may be varied by varying the spacing S between adjacent strands. Generally, the smaller the spacing S between adjacent strands, the more reinforcement and/or puncture resistance fibers strands 504 provide. The absorption properties of the fine fiber mat 502 may likewise be varied by adjusting the spacing S between adjacent strands, with the absorption properties improving with increased spacing S. A spacing S of between about 5µm and about 10mm provides an exceptional level of increased strength (e.g., puncture resistance) and electrolyte absorption properties.

One advantage of fiber strands 504 is that the battery's electrolyte may directly contact fine fiber mat 502, or portions thereof, since fiber strands 504 need not necessarily cover the entire surface of fine fiber mat 502. Similar to the battery separators described above, the combination of fine fiber mat 502 and fiber strands 504 provide improved battery separator strength (e.g., puncture resistance) while also allowing the electrolyte to be absorbed and/or retained within the separator and in contact with the battery's electrodes.

Fig. 5B illustrates a battery separator 500' similar to battery separator 500 except that fine fiber mat 502 includes fiber strands, 504A and 504B, on both surfaces, 506A and 506B, of fine fiber mat 502. Specifically, arranged and coupled on a first surface 506A of fine fiber mat 502 is a plurality of fiber strands 504A. Fiber strands 504A may be coarse fibers of any type and/or fiber diameter size described above. Fiber strands 504A may have a spacing S₁ between adjacent strands, which in some embodiments may be between about 5µm and about 10mm. Arranged and coupled on a second surface 506B opposite surface 506A of fine fiber mat 502 is a plurality of fiber strands 504B. Like fiber strands 504A, fiber strands 504B may be coarse fibers of any type and/or fiber diameter size described above. Fiber strands 504B may have a spacing S₂ between adjacent strands, which in some embodiments may be between about 5µm and about 10mm. In some embodiments, spacing S₁ may be roughly equivalent to spacing S₂ so that both surfaces of fine fiber mat 502 have fiber strands with roughly identical spacing, or spacing S₁ may be different than spacing S₂ so that the surfaces of fine fiber mat 502 have fiber strands with different spacing. Similarly, the fiber diameters of fiber strands, 504A and 504B, may be roughly equivalent or different so that battery separator 500' may be modified or adjusted depending on the battery, need, environment, operational use, and the like for which it is used.

Fig. 5C illustrates a battery separator 500" having a plurality of bi-directionally arranged fiber strands, 504 and 514, disposed and coupled on one surface of fine fiber mat 502. Specifically, fine fiber mat 502 includes a plurality of first fiber strands 504 that extend longitudinally from near a first side or edge of mat 502 toward an opposite side or edge of the mat 502, and further includes a plurality of second fiber strands 514 that extend transversely (e.g., roughly perpendicular to fiber strands 504) from near a second side or edge of mat 502 toward an opposite side or edge of the mat 502. The first fiber strands 504 may have a spacing S₃ between adjacent strands, which in some embodiments may be between about 5µm and about 10mm. Likewise, the second fiber strands 514 may have a spacing S₄ between adjacent strands, which in some embodiments may be between about 5µm and about 10mm. In some embodiments, spacing S₃ may be roughly equivalent to spacing S₄ so that first and second fiber strands, 504 and 514, are arranged on the surface of fine fiber mat 502 with roughly identical spacing, or spacing S₃ may be different than spacing S₄ so that first and second fiber strands, 504 and 514, are arranged on the surface of fine fiber mat 502 with different spacing. Similarly, the fiber diameters of fiber strands, 504 and 514, may be roughly equivalent or different so that battery separator 500" may be modified or adjusted depending on the battery, need, environment, operational use, and the like for which it is used. Battery separator 500" may provide increase strength (e.g., puncture resistance) due to the increased number of fiber strands and/or may provide increased strength due to the plurality of fiber strands extending across the surface of fine fiber mat 502 in a second direction. Although not shown, the bi-directional strand configuration of Fig. 5C may be included on both surfaces of fine fiber mat 502 similar to that shown in Fig. 5B.

The battery separators (500, 500', and 500") of Figs. 5A-5C provide increased strength (e.g., puncture resistance) while providing excellent electrolyte absorbing properties. Although not shown, in some embodiments, an additional fiber mat (i.e., comprising coarse fibers, fine fibers, or some combination thereof) may be positioned adjacent one or more of the sides of battery separators 500, 500', and/or 500" such that the fiber strands are disposed between fiber mats. The additional fiber mat may provide increased reinforcement and/or electrolyte absorption capabilities to the battery separators 500, 500', and/or 500" as desired.

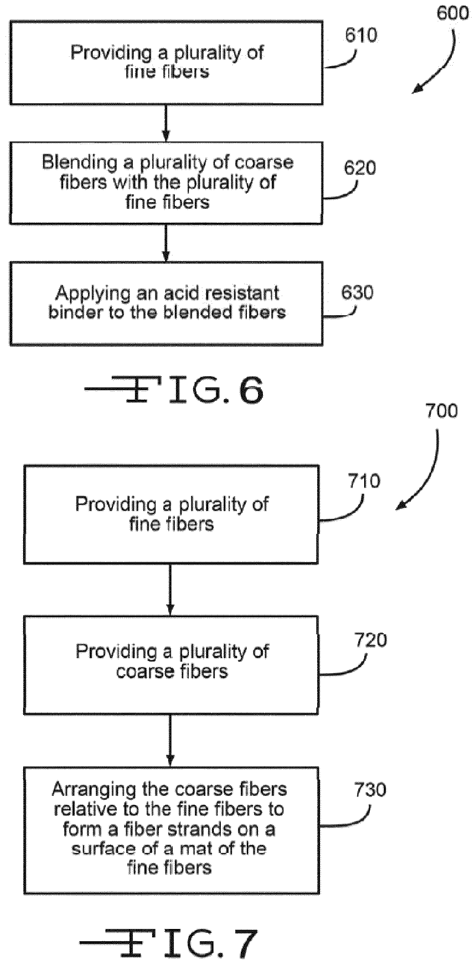

Referring now to Fig. 6, illustrated is a method of providing a battery separator having improved strength (e.g., puncture resistance) and electrolyte absorption properties. At block 610, a plurality of first fibers having a fiber diameter of between about 0.05 and 5 microns are provided. The fine fibers may allow a fiber mat to absorb and/or retain an electrolyte (e.g., sulfuric acid) of the battery. As described above, in one embodiment the fibers may have a diameter equal to or smaller than about 1 micron. At block 620, a plurality of second fibers may be blended with the plurality of first fibers. The plurality of second fibers includes fibers having a fiber diameter of between 8 and 20 microns. The plurality of second fibers may strengthen the mat (e.g., provide increased puncture resistance). As described above, in some embodiments, the second fibers may have diameters equal to or larger than about 8 microns.

At block 630, an acid resistant binder is applied to the blended fibers so as to couple the plurality of first fibers with the plurality of second fibers to form a reinforced nonwoven fiber mat capable of absorbing an electrolyte of a battery. The nonwoven fiber mat includes 60 percent or more of the first fibers, 40 percent or less of the second fibers, and 0.5 to 15% of the acid resistant binder. In some embodiments, the method may also include blending a plurality of polymer fibers with the plurality of first fibers and the plurality of second fibers. In such embodiments, the nonwoven fiber mat may include between about 0.1 and 15% of the plurality of polymer fibers. In some embodiments, the method may further include: providing a second mat comprising a plurality of the first fibers and coupling the second mat with the nonwoven fiber mat so that the plurality of second fibers are disposed between the nonwoven fiber mat and the second mat.

As an alternative to block 620, at block 630, a plurality of fiber strands may be arranged and coupled with one surface of the first mat. Coupling the fiber strands may involve bonding the strands using one or more binders or laminating the strands as described herein. The fiber strands may reinforce the surface of the first mat, such as by providing improved puncture resistance. The fiber strands may include the coarse fibers described herein and may be arranged uni-directionally or bi-directionally on the surface of the first mat so as to extend between opposite sides or edges of the first mat. The fiber strands may likewise be arranged uni-directionally or bi-directionally on a second opposite surface of the first mat so that two surfaces of the first mat include reinforcing fiber strands. The fiber strands may be arranged on the surface of the first mat so as to have a spacing of between about 5µm and about 10mm between adjacent strands.

Referring now to Fig. 7, illustrated is another method of providing a battery separator. At block 710, a plurality of fine fibers having a fiber diameter of between about 0.05 and 5 microns are provided. The fine fibers may allow a fiber mat to absorb and/or retain an electrolyte (e.g., sulfuric acid) of the battery. As described above, in one embodiment the fibers may have a diameter equal to or smaller than about 1 micron. At block 720, a plurality of coarse fibers having a fiber diameter of between about 8 and 20 microns are provided. As described above, in some embodiments, the coarse fibers may have diameters equal to or larger than about 8 microns and in one embodiment, all or a majority of the coarse fibers may be between about 8 and about 30 microns, and more commonly between about 8 and about 20 microns.

At block 730 the plurality of coarse fibers may be arranged on a surface of a mat formed from the plurality of fine fibers so as to form a plurality of strands on the surface of the fine fiber mat. The plurality of strands may extend between a first edge of the fine fiber mat and a second edge of the fine fiber mat that is opposite the first edge. Arranging the plurality of strands on the surface of the fine fiber mat may involve bonding the strands using one or more binders or laminating the strands as described herein. The fiber strands may reinforce the surface of the fine fiber mat, such as by providing improved puncture resistance. The fiber strands may be arranged uni-directionally or bi-directionally on the surface of the fine fiber mat so as to extend between opposite sides or edges of the first mat. The fiber strands may likewise be arranged uni-directionally or bi-directionally on a second surface of the fine fiber mat so that two surfaces (usually opposite each other) of the fine fiber mat include reinforcing fiber strands. The fiber strands may be arranged on the surface of the first mat so as to have a spacing of between about 5µm and about 10mm between adjacent strands.

### Examples

Several batteries constructed according to the embodiments described above were tested and the results are described herein below. Microfibers having an average diameter or approximately 3µm (i.e., 0.000003 meters) were used to make microfiber sheets via a wet-laid pilot mat machine. In one embodiment, 10 weight percentage (i.e., 10 wt.%) 13µm (i.e., 0.000013 meters) ¾ inch glass fibers were blended with or into the microfibers to make a first hybrid glass mat. In another embodiment, and 20 weight percentage (i.e., 20 wt.%) 13µm (i.e., 0.000013 meters) ¾ inch glass fibers were blended with or into the microfibers to make a second hybrid glass mat. Mats with approximately 100 percent (i.e., 100%) microfibers were also made through the same process and used as control samples. An acrylic emulsion binder was used to bond the glass fibers. The mat weight was targeted at 89 g/m² (i.e., 1.8lbs/100ft²). Samples were chosen and prepared for tensile and puncture strength tests performed by an Instron® machine.

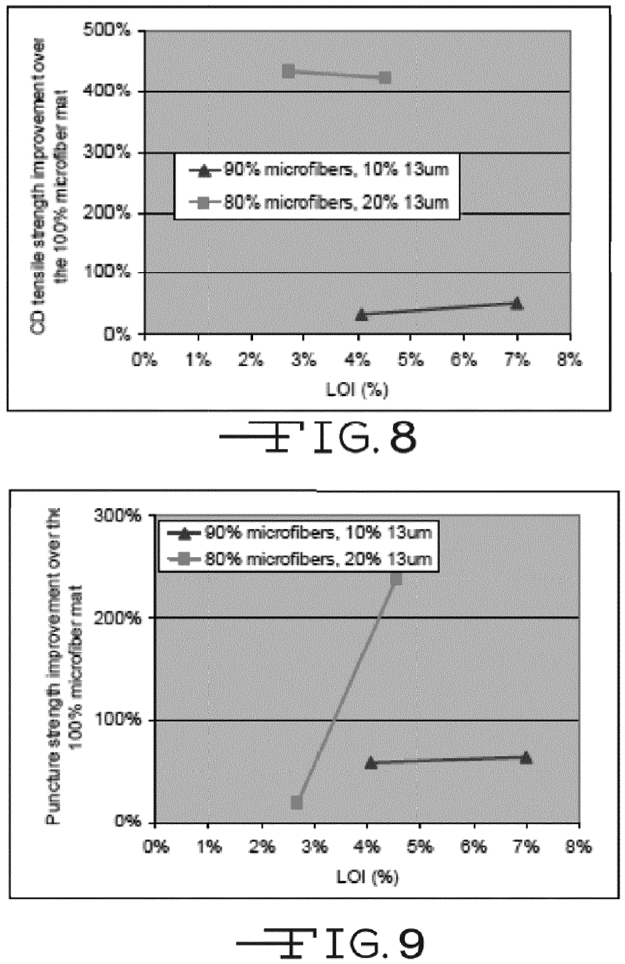

Fig. 8 shows the relationship of cross-machine direction (CD) tensile strength improvement vs. binder LOI% (Loss On Ignition Percentage) and demonstrates the effect on tensile strength by blending the fibers. The improvement percentages are calculated based on the 100% microfiber sheets at the same LOIs. Machine direction (MD) and CD tensile strengths for these mats are almost identical; therefore, only the relationship of the CD tensile strength is shown in Fig. 8. Fig. 8 demonstrates that moderate improvements (i.e., approximately 30%-50%) are gained with 10% blending of the 13µm fibers and LOI% does not seem to be affected significantly. With 20% blending of the 13µm fibers, more than 400% improvement is achieved with less than 5% LOI. This significant improvement may result from the addition of 13µm fibers, due to the higher aspect ratio of 13µm fibers over the microfibers. Again, binder LOI% does not seem to be affected significantly.

Fig. 9 shows the puncture strength improvement (over the 100% microfiber mat) vs. binder LOI%. As shown, for the 10% 13µm fiber blend, an approximately 60% improvement is gained for both a 4% and a 7% LOI. With the 20% 13µm fiber blend, the improvement increases sharply with LOI - i.e., from approximately 20% at roughly 3% LOI to approximately 240% at roughly 5% LOI. Puncture strength is important in AGM mats for prevention of dendrite growth, which is a common cause of failure for lead acid batteries. Fig. 9 shows that 20% blending of the 13µm fibers can improve the puncture strength significantly with roughly 5% LOI.

Where a range of values is provided, it is understood that each intervening value, to the tenth of the unit of the lower limit unless the context clearly dictates otherwise, between the upper and lower limits of that range is also specifically disclosed. Each smaller range between any stated value or intervening value in a stated range and any other stated or intervening value in that stated range is encompassed. The upper and lower limits of these smaller ranges may independently be included or excluded in the range, and each range where either, neither or both limits are included in the smaller ranges is also encompassed within the invention, subject to any specifically excluded limit in the stated range. Where the stated range includes one or both of the limits, ranges excluding either or both of those included limits are also included.

As used herein and in the appended claims, the singular forms "a", "an", and "the" include plural referents unless the context clearly dictates otherwise. Thus, for example, reference to "a process" includes a plurality of such processes and reference to "the device" includes reference to one or more devices and equivalents thereof known to those skilled in the art, and so forth.

Also, the words "comprise," "comprising," "include," "including," and "includes" when used in this specification and in the following claims are intended to specify the presence of stated features, integers, components, or steps, but they do not preclude the presence or addition of one or more other features, integers, components, steps, acts, or groups.

## Claims

1. An absorbed glass mat (AGM) separator for a lead-acid battery comprising:
a nonwoven fiber mat positionable between electrodes of a battery to electrically insulate the electrodes, the nonwoven fiber mat comprising:
a plurality of entangled fine fibers , the plurality of entangled fine fibers comprising fibers having a fiber diameter of between 0.05 and 5 microns;
a plurality of coarse fibers blended with the plurality of entangled fine fibers, the plurality of coarse fibers comprising fibers having a fiber diameter of between 8 and 20 microns; and
an acid resistant binder that couples the plurality of entangled fine fibers with the plurality of coarse fibers to form the nonwoven fiber mat;
wherein the nonwoven fiber mat comprises (a) 60 weight percent or more of the fine glass fibers, 40 weight percent or less of the coarse glass fibers, in relation to each other and (b) 0.5 to 15% by weight of the acid resistant binder and said nonwoven fiber mat having a thickness of 0.381 to 2.03 mm (0.015 inch to 0.08 inch).

2. The battery separator of claim 1, wherein the fine fibers comprise fibers having a diameter less than 1 micron.

3. The battery separator of claim 1, wherein the coarse fibers comprise fibers having a diameter between 10 microns and 20 microns.

4. The battery separator of claim 1, further comprising an additional fiber mat disposed on a surface of the nonwoven fiber mat, the additional fiber mat comprising a plurality of the coarse fibers so as to reinforce the nonwoven fiber mat.

5. The battery separator of claim 1, wherein the plurality of coarse fibers are arranged with respect to the plurality of entangled fine fibers so as to form a plurality of strands on a first surface of a mat formed of the plurality of entangled fine fibers, wherein the plurality of strands extend from near a first side of the mat toward an opposite side of the mat.

6. The battery separator of claim 1, further comprising:
a second plurality of entangled fine fibers that form an additional fiber mat, wherein the additional fiber mat is disposed on a surface of the nonwoven fiber mat, and
wherein the plurality of coarse fibers are disposed on at least one surface of the additional fiber mat.

7. The battery separator of claim 1, wherein the binder is sulfuric acid resistant and simultaneously wettable by sulfuric acid.

8. The battery separator of claim 1, wherein the nonwoven fiber mat comprises a wicking strength, or capillary rise, as defined by ISO8787 of 0.2-10cm in less than 10min.

## Patentansprüche

1. AGM-Separator (Absorbed Glass Mat) für eine Bleisäurebatterie, umfassend:
eine Faservliesmatte, die zwischen Elektroden einer Batterie positionierbar ist, um die Elektroden elektrisch zu isolieren, wobei die Faservliesmatte umfasst:
eine Vielzahl von verschlungenen feinen Fasern, wobei die Vielzahl von verschlungenen feinen Fasern Fasern mit einem Faserdurchmesser zwischen 0,05 und 5 Mikrometer umfasst;
eine Vielzahl von groben Fasern, die mit der Vielzahl von verschlungenen feinen Fasern vermischt sind, wobei die Vielzahl von groben Fasern Fasern mit einem Faserdurchmesser zwischen 8 und 20 Mikrometer umfasst; und
ein säurebeständiges Bindemittel, das die Vielzahl von verschlungenen feinen Fasern mit der Vielzahl von groben Fasern verbindet, um die Vliesfasermatte zu bilden;
wobei die Vliesfasermatte (a) 60 Gewichtsprozent oder mehr der feinen Glasfasern, 40 Gewichtsprozent oder weniger der groben Glasfasern, relativ zueinander, und (b) 0,5 bis 15 Gewichtsprozent des säurebeständigen Bindemittels umfasst und die Faservliesmatte eine Dicke von 0,381 bis 2,03 mm (0,015 Zoll bis 0,08 Zoll) aufweist.

2. Batterieseparator nach Anspruch 1, wobei die feinen Fasern Fasern mit einem Durchmesser von weniger als 1 Mikrometer umfassen.

3. Batterieseparator nach Anspruch 1, wobei die groben Fasern Fasern mit einem Durchmesser zwischen 10 Mikrometer und 20 Mikrometer umfassen.

4. Batterieseparator nach Anspruch 1, ferner umfassend eine zusätzliche Fasermatte, die auf einer Fläche der Vliesfasermatte angeordnet ist, wobei die zusätzliche Fasermatte eine Vielzahl der groben Fasern umfasst, um die Vliesfasermatte zu verstärken.

5. Batterieseparator nach Anspruch 1, wobei die Vielzahl von groben Fasern in Bezug auf die Vielzahl von verschlungenen feinen Fasern angeordnet ist, um eine Vielzahl von Strängen auf einer ersten Fläche einer Matte zu bilden, die aus der Vielzahl von verschlungenen feinen Fasern gebildet ist, wobei sich die Vielzahl von Strängen von nahe einer ersten Seite der Matte zu einer gegenüberliegenden Seite der Matte erstreckt.

6. Batterieseparator nach Anspruch 1, ferner umfassend:
eine zweite Vielzahl von verschlungenen feinen Fasern, die eine zusätzliche Fasermatte bilden, wobei die zusätzliche Fasermatte auf einer Fläche der Vliesfasermatte angeordnet ist, und wobei die Vielzahl von groben Fasern auf mindestens einer Fläche der zusätzlichen Fasermatte angeordnet ist.

7. Batterieseparator nach Anspruch 1, wobei das Bindemittel schwefelsäurebeständig und gleichzeitig mit Schwefelsäure benetzbar ist.

8. Batterieseparator nach Anspruch 1, wobei die Faservliesmatte eine Dochtwirkungsstärke oder einen Kapillaranstieg wie in ISO8787 definiert von 0,2 bis 10 cm in weniger als 10 min aufweist.

## Revendications

1. Séparateur (AGM) de tapis de verre absorbé pour une batterie au plomb-acide comprenant:
un tapis de fibres non tissées positionnable entre les électrodes d'une batterie pour isoler électriquement les électrodes, le tapis de fibres non tissées comprenant:
une pluralité de fibres fines empêtrées, la pluralité de fibres fines empêtrées comprenant les fibres ayant un diamètre de la fibre entre 0,05 et 5 microns;
une pluralité de fibres grossières mélangées avec la pluralité de fibres fines empêtrées, la pluralité de fibres grossières comprenant les fibres ayant un diamètre de la fibre entre 8 et 20 microns; et
un liant résistant à l'acide qui couple la pluralité de fibres fines empêtrées avec la pluralité de fibres grossières pour former le tapis de fibres non tissées;
où le tapis de fibres non tissées comprend (a) 60 pourcent en poids ou plus des fibres de verre fines, 40 pourcent en poids ou moins des fibres de verre grossières, en relation l'une à l'autre et (b) 0,5 à 15% en poids du liant résistant à l'acide et ledit tapis de fibres non tissées ayant une épaisseur de 0,381 à 2, 03 mm (0,015 pouces à 0,08 pouces).

2. Séparateur de batterie selon la revendication 1, où les fibres fines comprennent les fibres ayant un diamètre de moins de 1 micron.

3. Séparateur de batterie selon la revendication 1, où les fibres grossières comprennent les fibres ayant un diamètre entre 10 microns et 20 microns.

4. Séparateur de batterie selon la revendication 1, comprenant de plus un tapis de fibres additionnel disposé sur une surface du tapis de fibres non tissées, le tapis de fibres additionnel comprenant une pluralité des fibres grossières pour renforcer le tapis de fibres non tissées.

5. Séparateur de batterie selon la revendication 1, où la pluralité de fibres grossières sont arrangées à l'égard de la pluralité de fibres fines empêtrées pour former une pluralité de faisceaux sur une première surface d'un tapis formé de la pluralité de fibres fines empêtrés, où la pluralité de faisceaux s'étendent de près d'un premier côté du tapis vers un côté opposé du tapis.

6. Séparateur de batterie selon la revendication 1, comprenant de plus :
une seconde pluralité de fibres fines empêtrées qui forment un tapis de fibres additionnel, où le tapis de fibres additionnel est disposé sur une surface du tapis de fibres non tissées, et où la pluralité de fibres grossières sont disposées sur au moins une surface du tapis de fibres additionnel.

7. Séparateur de batterie selon la revendication 1, où le liant est résistant à l'acide sulfurique et mouillable de manière simultane par acide sulfurique.

8. Séparateur de batterie selon la revendication 1, où le tapis de fibres non tissées comprend une résistance de mèche, ou ascension capillaire, telle que définie par ISO 8787 de 0,2-10 cm en moins de 10 min.
